# EUROPÄISCHE PATENTANMELDUNG

(11) **EP 1 818 632 A2**
(43) Veröffentlichungstag der Anmeldung: **15.08.2007**
(21) Anmeldenummer: 07002148.0
(22) Anmeldetag: 01.02.2007
(51) Int. Cl.: F25C 1/00

(54) **Verfahren und Vorrichtung zum Behandeln von Eisbrei**

(30) Priorität: 08.02.2006 DE 102006005999; 18.08.2006 DE 102006038698
(71) Anmelder: Goseling, Hubert, 97959 Assamstadt (DE)
(72) Erfinder: Goseling, Hubert, 97959 Assamstadt (DE)
(74) Vertreter: von den Steinen, Axel

(57) **Zusammenfassung**

Die Erfindung betrifft Verfahren zum Behandeln von Eisbrei, der aus einem Kühlmittel, insbesondere aus einem Wasser-Alkohol-Gremisch, erzeugt und in einem Behandlungsspeicherbehältnis (2) gespeichert und zur Abfüllung bereitgestellt wird. Bei dem Verfahren wird die Konzentration an Eis im Eisbrei ermittelt, der ermittelte Istwert mit einem vorgegeben Sollwert verglichen und die Konzentration nach der Abweichung des Istwertes vom Sollwert verändert.

## Beschreibung

Die Erfindung betrifft ein Verfahren zum Behandeln von Eisbrei nach dem Oberbegriff des Anspruchs 1, eine Vorrichtung zum Behandeln von Eisbrei nach dem Oberbegriff des Anspruchs 23 und ein Prozessbehältnis nach dem Oberbegriff des Anspruchs 44.

In der Nahrungs- und Genussmittelbranche müssen täglich Lebensmittel, wie Obst, Gemüse, Fleisch, Fisch etc., zuverlässig gekühlt zu ihren Bestimmungsorten transportiert werden. Insbesondere aufgrund der steigenden Akzeptanz des Outsourcing gewinnen in jüngere Zeit Catering-Dienste, bei denen die Bereitstellung fertig zubereiteter Mahlzeiten in einem Unternehmen durch ein fremdes Unternehmen erfolgt, immer mehr an Bedeutung.

Bekanntlich muss aus hygienischen und lebensmittelrechtlichen Gründen die Temperatur der Lebensmittel während des Transports auf dem richtigen Niveau gehalten werden. Um den jeweiligen Kühl-/Froststellen im Transportmittel, beispielsweise einem Lieferwagen, Kälte zuzuführen, ist es bekannt, einen vor dem Transport mit Eisbrei zu füllenden geschlossenen Kältckreislauf vorzusehen und darin förderfähigen bzw. pumpbaren Eisbrei zu zirkulieren.

Die Kühldauer, d.h. die Zeitspanne, über die mit einer bestimmten Menge Eisbrei die Temperatur der Speisen während des Transports im Sollbereich gehalten werden kann, hängt von der Konzentration von Eis im Eisbrei ab. Wird bei der Befüllung des Kältekreislaufsystems Eisbrei mit einer zu geringen Konzentration gewählt, so liegt die Kühldauer unter der Transportzeit und die Temperaturen der Speisen überschreiten nach dem Ablauf der Kühldauer das Sollniveau, wodurch die Speisen zu verderben drohen. Die Befüllung des Kühlkreislaufsystems mit Eisbrei von zu hoher Konzentration hingegen bedeutet eine unnötig hohe Kühldauer, was aus Gründen der Energieeffizienz zu vermeiden ist.

Die Aufgabe der Erfindung besteht nun darin, ein Verfahren und eine Vorrichtung zur Behandlung von Eisbrei vorzuschlagen, mit welchen Eisbrei bereitgestellt werden kann, bei dem die mit einer bestimmten Menge Eisbrei erreichbare Kühldauer wesentlich besser als beim Stand der Technik der zu erwartenden Dauer für den Kühltransport angepasst werden kann.

Diese Aufgabe wird durch ein Verfahren mit den Merkmalen des Anspruchs 1 und eine Vorrichtung mit den Merkmalen des Anspruchs 23 gelöst.

Bei dem Verfahren zum Behandeln von Eisbrei, der aus einem Kühlmittel, insbesondere aus einem Wasser-Alkohol-Gemisch, erzeugt und in einem Behandlungsspeicherbehältnis gespeichert und zur Abfüllung bereitgestellt wird, wird die Konzentration an eisförmiger Komponente (wobei in diesem Text die eisförmige Komponente des Kühlmittels auch einfach nur als Eis bezeichnet wird) im Eisbrei ermittelt, der ermittelte Istwert mit einem vorgegebenen Sollwert verglichen und die Konzentration nach der Abweichung des Istwertes vom Sollwert verändert. Auf welche Weise die Konzentration bestimmt wird, ist grundsätzlich beliebig. Beispielsweise sind optische Verfahren, wie die Photometrie, Photo-Spektrometrie, Refraktrometrie, sowie elektrische Verfahren, wie die elektro-chemische Potentiometrie und die Leitfähigkeitsmessung als Verfahren zur Ermittlung der Konzentration denkbar. Auch für die Veränderung der Konzentration kommen grundsätzlich alle denkbaren geeigneten Verfahren in Frage. Selbstverständlich kann der Sollwert innerhalb eines nach unten (d.h. zur Seite geringerer Konzentration hin) von einem Minimalwert und nach oben (d.h. zur Seite höherer Konzentration hin) von einem Maximalwert begrenzten Vorgabeberciches bzw. Toleranzbereiches liegen, wobei der Sollwert als überschritten gilt, wenn der Istwert größer als der Maximalwert ist und wobei der Sollwert als unterschritten gilt, wenn der Istwert kleiner als der Minimalwert ist.

Gemäß einer Ausführungsform wird bei dem Verfahren eine Probe Eisbrei aus dem Behandlungsspeicherbehältnis entnommen und die Konzentration der Probe ermittelt, wobei ausgehend von der an der Probe festgestellten Eiskonzentration auf die Konzentration der im Behandlungsspeicherbehältnis vorhandenen Menge Eisbrei geschlossen wird.

Vorzugsweise wird der Eisbrei zur Erzielung einer homogenen Eiskonzentration vor der Entnahme der Probe durchgemischt.

Bei einer vorteilhaften Ausführungsvariante werden die flüssige Komponente und die eisförmige Komponente der Probe voneinander getrennt und die Konzentration durch eine Kombination zweier Gewichts-und/oder Volumenmessungen von mindestens einer der Komponenten und/oder der Probe ermittelt.

Gemäß einer Ausführungsvariante wird vor der Trennung der Komponenten das Gewicht und/oder das Volumen der Probe ermittelt und nach oder während der Trennung das Gewicht und/oder das Volumen wenigstens einer der Komponenten ermittelt.

Bei einer anderen Ausführungsvariante wird nach und/oder während der Trennung der Komponenten das Gewicht und/oder das Volumen jeder der beiden Komponenten ermittelt.

Die Homogenität der Probe kann weiter erhöht werden, indem eine Menge an Eisbrei in einem Kreislauf zirkuliert und die Probe aus der zirkulierten Menge entnommen wird.

Beispielsweise wird die Probe zur Trennung der Komponenten einer Siebung unterzogen.

Gemäß einer Ausführungsvariante wird die Konzentration durch Zuführen von eisförmigem und/oder flüssigem Ausgleichskühlmittel in dem Behandlungsspeicherbehältnis verändert. Wie oben bereits angesprochen, kann die Konzentration jedoch durch andere geeignete Verfahren verändert werden, beispielsweise durch Kühlung oder Erwärmung des Eisbreis im Speicherbehältnis.

Insbesondere wird, falls der Istwert den Sollwert überschreitet, dem Behandlungsspeicherbehältnis flüssiges Ausgleichskühlmittel oder Ausgleichseisbrei zugeführt, dessen Eiskonzentration unterhalb des Istwertes liegt. Entsprechend wird, falls der Istwert den Sollwert überschreitet, dem Behandlungsspeicherbehältnis Ausgleichseis oder Ausgleichseisbrei zugeführt, dessen Eiskonzentration oberhalb des Istwertes liegt.

Gemäß einer besonders vorteilhaften Ausführungsform werden das Ausgleichseis, der Ausgleichseisbrei sowie das flüssige Ausgleichskühlmittel aus einem zusätzlich zum Eis im Behandlungsspeicherbehältnis vorhandenen Eisbreivorrat gewonnen. Grundsätzlich ist es auch denkbar, das Ausgleichseis, den Ausgleichseisbrei sowie das flüssige Ausgleichskühlmittel aus dem Behandlungsspeicherbehältnis zu entnehmen.

Bei einer besonders vorteilhaften Ausführungsform werden zur Gewinnung des Ausgleichseises, des Ausgleichscisbreis sowie des flüssigen Ausgleichskühlmittels das Eis und die flüssige Komponente des aus dem Eisbreivorrat entnommenen Vorratseisbreis voneinander getrennt.

Beispielsweise wird der Vorratseisbrei zur Trennung der Komponenten einer Siebung unterzogen.

Gemäß einer besonders vorteilhaften Ausführungsvariante wird ein mit einer Menge Eisbrei befüllbares Aufnahmebehältnis bereitgestellt, an dem eine Trennvorrichtung, insbesondere ein Sieb, vorgesehen ist, mit der die flüssige Komponente und das Eis der Menge voneinander getrennt werden können. Am Aufnahmebehältnis sind Messmittel zur Messung des Volumens und/oder des Gewichts einer in das Behältnis gefüllten Masse vorgesehen. Zur Bestimmung der Konzentration wird die Probe in das Aufnahmebehältnis gefüllt, die flüssige Komponente und das Eis der Probe voneinander getrennt und die Konzentration durch die Kombination zweier Gewichts- und/oder Volumenmessungen von mindestens einer der Komponenten und/oder der Probe ermittelt. Zur Erzeugung von flüssigem Ausgleichskühlmittel, Ausgleichseisbrei oder Ausgleichseis wird Vorratseisbrei in das Aufnahmebehältnis gefüllt und die flüssige Komponente vom Eis des Vorratseisbreis getrennt.

Gemäß einer Ausführungsform sind am Aufnahmebehältnis Druckbeaufschlagungsmittel vorgesehen, mit denen der im Aufnahmebehältnis herrschende Druck bei der Siebung erhöht wird. Auf diese Weise wird der Vorgang der Siebung beschleunigt und das Aufnahmebehältnis vollständig geleert, was einen guten Durchfluss im Messbehältnis sicherstellt.

Bei einer anderen Ausführungsvariante werden ein mit der Probe befüllbares Messbehältnis und ein mit Vorratseisbrei befüllbares Dosierbehältnis bereitgestellt, wobei am Messbehältnis und am Dosierbehältnis jeweils eine Trennvorrichtung vorgesehen ist.

Beispielsweise sind am Messbehältnis Messmittel zur Messung des Volumens und/oder des Gewichts der im Messbehältnis enthaltenen Masse vorgesehen. Die Probe wird in das Messbehältnis gefüllt, die flüssige Komponente und das Eis der Probe werden voneinander getrennt, und die Konzentration wird durch die Kombination zweier Gewichts- und/oder Volumenmessungen von mindestens einer der Komponenten und/oder der Probe ermittelt.

Gemäß einer besonders vorteilhaften Ausgestaltung der Erfindung wird zur Erzeugung von flüssigem Ausgleichskühlmittel Ausgleichseisbrei oder Ausgleichseis als Vorratseis in das Dosierbehältnis gefüllt, und die flüssige Komponente wird vom Eis des Vorratseisbreis getrennt.

Beispielsweise sind am Dosierbehältnis Messmittel zum Messen des Volumens und/oder des Gewichts der im Messbehältnis enthaltenen Masse vorgesehen, wobei mit dem Messmittel die erforderliche Menge an flüssigem Ausgleichskühlmittel, Ausgleichseisbrei oder Ausgleichseis abgemessen wird.

Beispielsweise sind am Messbehältnis und/oder am Dosierbehältnis Druckbeaufschlagungsmittel vorgesehen, mit denen der im Behältnis herrschende Druck bei der Siebung erhöht wird.

Der Wirkungsgrad des Verfahrens kann gesteigert werden, wenn die Probe nach der Vermessung wieder dem Behandlungsspeicherbehältnis zugeführt wird.

Ferner lässt sich der Wirkungsgrad des Verfahrens verbessern, wenn die nicht dem Behandlungsspeicherbehältnis zuzuführende Menge an Vorratseisbrei wieder dem Eisbreivorrat zugeführt wird.

Mit der Erfindung lässt sich Eisbrci herstellen, bei dem die mit einer bestimmten Menge an Eisbrei erreichbare Kühldauer der zu erwartenden Transportdauer angepasst werden kann, was zu einer Verbesserung der Effizienz und der Wirtschaftlichkeit bei der Verwendung und Erzeugung von Eisbrei führt.

Nachfolgend wird ein Ausführungsbeispiel der Erfindung unter Bezugnahme auf die beiliegende Zeichnung näher erläutert.

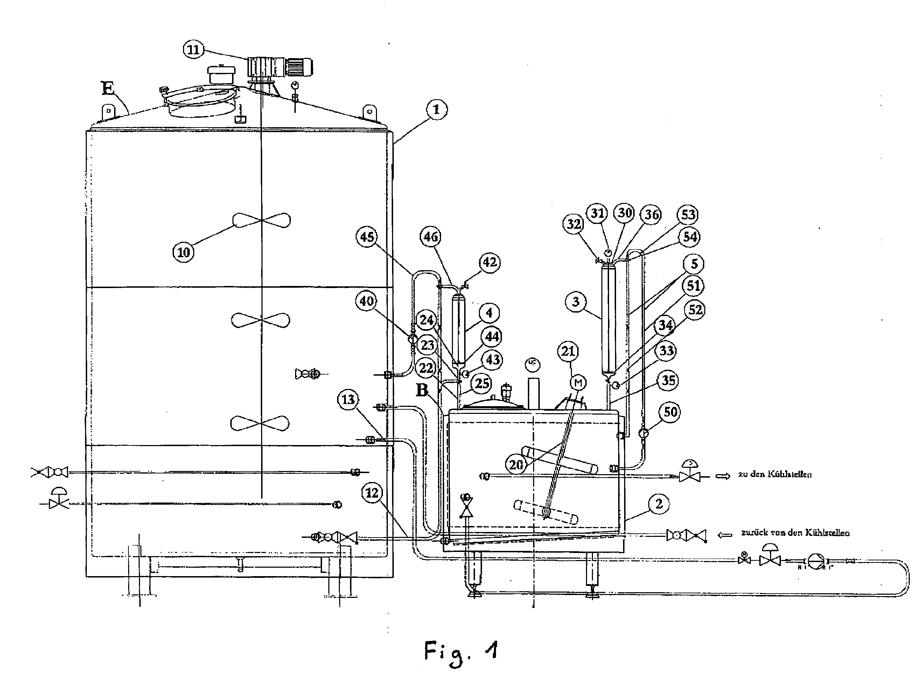

Die einzige Fig. 1 zeigt in schematischer, prinzipieller Darstellung eine erfindungsgemäße Vorrichtung zur Behandlung von Eisbrei mit Eisbreierzeugereinrichtung.

Bei der in Fig. 1 dargestellten Anlage dient die Eisbreierzeugereinrichtung E zur Erzeugung von Eisbrei aus einem geeigneten Kühlmittel, beispielsweise einem Wasser-Alkohol-Gemisch.

Die Eisbreierzeugereinrichtung E umfasst ein zylindrisches Vorratsspeicherbehältnis 1, in dem ein erstes Rührwerk 10 vorgesehen ist, das von einem am Deckel des Vorratsspeicherbehältnisses 1 befestigten ersten Elektromotor 11 angetrieben wird.

Neben der Eisbreierzeugereinrichtung E ist eine Eisbreibehandlungsvorrichtung B angeordnet, die ein ebenfalls zylindrisches Behandlungsspeicherbchältnis 2 umfasst, das zur Aufnahme von erfindungsgemäß zu behandelndem Eisbrei dient. Der Eisbrei wird im Behandlungsspeicherbchältnis 2 zur Abfüllung, z.B. in das Kühlkreislaufsystem eines Lieferwagens, bereitgestellt.

Zur Durchmischung des Eisbreis im Behandlungsspeicherbehältnis 2 ist ein zweites Rührwerk 20 vorgesehen, das von einem auf dem Deckel des Behandlungsspeicherbehältnisses 2 angeordneten zweiten Elektromotor 21 angetrieben wird.

Oberhalb des Behandlungsspeicherbehältnisses 2 sind ein Messbehältnis 3 und ein Dosierbehältnis 4 angeordnet, die jeweils am Deckel des Behandlungsspeicherbehältnisses 2 befestigt und als hohlzylindrische Schaulaternen ausgeführt sind, deren Längsachsen senkrecht angeordnet sind.

Oberhalb des Messbchältnisses 3 ist ein am Deckenabschnitt 30 des Messbehältnisses 3 befestigter erster Füllhöhensensor 31 vorgesehen, mit dem sich die Füllhöhe einer in das Messbehältnis 3 gefüllten Masse, z.B. unter Verwendung von Ultraschall, berührungsfrei messen lässt.

Am Messbehältnis 3 sind ferner eine erste Drucklufteinheit 32, mittels der das Innere des Messbehältnisses 3 mit Druckluft beaufschlagt werden kann, sowie ein erster Drucksensor 33 vorgesehen. Eine (nicht dargestellte) erste Drucksteuereinrichtung erfasst über den ersten Drucksensor 33 den Druck im Inneren des Messbehältnisses 3 und kann ausgehend vom erfassten Druckwert die Drucklufteinheit ansteuern, um den Druck im Messbehältnis 3 auf einen vorgebbaren Wert einzustellen bzw. zu halten.

Nahe dem Boden des Messbehältnisses 3 befindet sich ein erstes Scheibenventil 34, das, wie weiter unten beschrieben, als Sieb zur Trennung der flüssigen Komponente von der eisförmigen Komponente von im Messbehältnis 3 aufgenommenem Eisbrei dient.

Am Dosierbehältnis 4 ist eine zweite Drucklufteinheit 42 vorgesehen, mittels der das Innere des Dosierbehältnisses 4 mit Druckluft beaufschlagt werden kann. Die Steuerung bzw. Regelung des Drucks im Inneren des Dosierbehältnisses 4 erfolgt mit Hilfe einer (nicht dargestellten) zweiten Drucksteuereinrichtung die über einen zweiten Drucksensor 43 den Druck im Inneren des Dosierbehältnisses 4 erfasst und ausgehend vom erfassten Druckwert die zweite Drucklufteinheit 42 ansteuert.

Nahe dem Boden des Dosierbehältnisses 4 befindet sich ein zweites Scheibenventil 44, das, wie weiter unten beschrieben, als Sieb zur Trennung der flüssigen Komponente von der eisförmigen Komponente von im Dosierbehältnis 4 aufgenommenem Eisbrei dient.

Am Dosierbehältnis 4 ist ein (nicht dargestellter) zweiter Füllhöhensensor vorgesehen, mit dem sich die Füllhöhe einer in das Dosierbehältnis 4 gefüllten Masse, z.B. unter Verwendung von Ultraschall, berührungsfrei messen lässt.

Das Innere des Dosierbehältnisses 4 steht über einen ersten Dosierzuleitungsabschnitt 45 und einen zweiten Dosierzuleitungsabschnitt 46 mit dem Inneren des Vorratsspeicherbehältnisses 1 der Eisbreierzeugereinrichtung E in Verbindung.

Der erste Dosierzuleitungsabschnitt 45 mündet einerseits in das Vorratsspeicherbehältnis 1 und andererseits in den in das Dosierbehältnis 4 mündenden zweiten Dosierzuleitungsabschnitt 46.

Das Dosierbehältnis 4 steht über eine Dosierableitung 22 mit dem Behandlungsspeicherbehältnis 2 in Verbindung. Die sich senkrecht erstreckende Dosierableitung 22 mündet oben unterhalb des zweiten Scheibenventils 44 in das Innere des Dosierbehältnisses 4 und unten in einen oberen Bereich des Behandlungsspeicherbehältnisses 2. Im Bereich der Einmündung der Dosierableitung 22 in das Dosierbehältnis 4 sitzt in der Dosierableitung 22 ein (nicht dargestelltes) zweites Auslassventil.

Unterhalb des zweiten Auslassventils ist in der Dosierableitung 22 ein Durchflussweg-Umschaltventil 23 angeordnet, so dass sich an der Dosierableitung 22 ein oberer Dosierableitungsabschnitt 24, der sich zwischen dem Dosierbehältnis 4 und dem Durchflussweg-Umschaltventil 23 erstreckt, sowie ein unterer Dosierableitungsabschnitt 25 definieren lässt, der sich zwischen dem Durchflussweg-Umschaltventil 23 und dem Behandlungsspeichcrbehältnis 2 erstreckt. Vom Durchflussweg-Umschaltventil 23 erstreckt sich eine Dosierrückleitung 12, die das Innere des Vorratsspeicherbehältnisses 1 mit dem Durchflussweg-Umschaltventil 23 verbindet.

Mit dem Durchflussweg-Umschaltventil 23 kann wahlweise die Verbindung zwischen oberem Dosierableitungsabschnitt 24 und unterem Dosierableitungsabschnitt 25 (bei gleichzeitiger Sperrung des Durchflusses vom oberen Dosierableitungsabschnitt 24 zur Dosierrückleitung 12) oder die Verbindung zwischen oberem Dosierableitungsabschnitt 24 und Dosierrückleitung 12 (bei gleichzeitiger Sperrung des Durchflusses vom oberen zum unteren Dosierableitungsabschnitt) auf Durchfluss geschaltet werden.

Das Messbehältnis 3 ist über eine sich senkrecht erstreckende Messableitung 35 mit dem Speicherbehältnis 2 verbunden. Die Messableitung 35 mündet mit dem oberen Ende unterhalb des ersten Scheibenventils 34 in das Innere des Messbehältnisses 3 und mit dem unteren Ende in das Behandlungsspeicherbehältnis 2. Im Bereich der Einmündung der Messableitung 35 in das Messbehältnis 3 sitzt in der Messableitung 35 ein (nicht dargestelltes) erstes Auslassventil.

Das Messbehältnis 3 ist über eine Zwischenleitung 36 mit einer Zirkulationseinheit 5 verbunden, die einen senkrecht angeordneten, mit einer Zirkulationspumpe 50 versehenen ersten Zirkulationsabschnitt 51, einen parallel zu letzterem verlaufenden zweiten Zirkulationsabschnitt 42 und einen bogenförmigen Verbindungsabschnitt 53 umfasst, der den ersten und den zweiten Zirkulationsabschnitt miteinander verbindet. Der erste und der zweite Zirkulationsabschnitt münden jeweils mit ihren unteren Enden an voneinander beabstandeten Mündungsstellen in das Innere des Behandlungsspeicherbehältnisses 2. Mit dem im ersten Zirkulationsabschnitt 51 sitzenden Zwischenventil 54 kann die Verbindung zwischen dem zweiten Zirkulationsabschnitt 52 und der Zwischenleitung 36 wahlweise gesperrt oder auf Durchfluss geschaltet werden.

Das Vorratsspeicherbehältnis 1 und das Behandlungsspeicherbehältnis 2 sind über eine Vorratszuleitung 13 direkt miteinander verbunden, die einerseits in das Innere des Vorratsspeicherbehältnisses 1 und andererseits in das Innere des Behandlungsspeicherbehältnisses 2 mündet.

Im Folgenden wird die Durchführung des erfindungsgemäßen Verfahrens mit der in Fig. 1 gezeigten Anlage detailliert beschrieben.

Zunächst wird das Behandlungsspeicherbehältnis 2 mit Eisbrei befüllt, wozu Eisbrei aus dem Vorratssspeicherbehältnis 1 durch die Vorratszuleitung 13 in das Behandlungsspeicherbehältnis 2 gepumpt wird.

Zur Erhöhung der Gleichmäßigkeit oder Homogenität der Konzentrationsverteilung über das Volumen des Eisbreis wird letzterer mit dem zweiten Rührwerk 20 durchmischt.

Nachdem einer (nicht dargestellten) elektronischen Behandlungssteuereinrichtung der Sollwert für den Eisgehalt des Eisbreis im Behandlungsspeicherbehältnis 2 eingegeben wurde, arbeitet die Behandlungssteuereinrichtung automatisch einen vorbestimmten Verfahrensablauf ab, bei dem die Konzentration an Eis (bzw. eisförmiger Komponente) im im Behandlungsspeicherbehältnis 2 vorhandenem Eisbrei ermittelt, der ermittelte Istwert mit einem vorgegeben Sollwert verglichen und die Konzentration nach der Differenz zwischen dem Istwert und dem Sollwert verändert wird. Der angesprochene Verfahrensablauf wird im Folgenden detailliert erläutert.

Zur Ermittlung der Konzentration wird in einem ersten Schritt Eisbrei aus dem Behandlungsspeicherbehältnis 2 der Zirkulationseinheit 5 zugeführt und der Eisbrei zur weiteren Erhöhung der Homogenität der Konzentrationsverteilung mit Hilfe der Zirkulationspumpe 40 eine bestimmte Zeit lang durch die Zirkulationseirtheit 5 und das Behandlungsspeicherbehältnis 2 zirkuliert. Anschließend wird das Messbehältnis 3 mit einer Probe Eisbrei gefüllt, wozu das Zwischenventil 54 geöffnet und dem Messbehältnis 3 über die Zwischenleitung 36 Eisbrei aus der Zirkulationseinheit 5 zugeführt wird, bis das Messbehältinis 3 zumindest nahezu vollständig mit Eisbrei gefüllt ist.

Als nächstes wird der Gehalt an eisförmiger Komponente in der im Messbehältnis 3 aufgenommenen Probe bestimmt, wozu verschiedene Messvarianten in Frage kommen:

Gemäß einer ersten Messvariante wird zunächst mittels des ersten Füllhöhensensors 31 das Volumen der Probe bestimmt, anschließend durch Öffnen des ersten Auslassventils die flüssige Komponente über das erste Scheibenventil 34 aus dem Messbehältnis 3 abgelassen und über die Messableitung 35 dem Behandlungsspeicherbehältnis 2 zugeführt. Der Durchflussquerschnitt der Durchflussöffnung (bzw. der Durchflussöffnungen) des ersten Scheibenventils 34 ist dabei so eingestellt, dass die flüssige Komponente der Probe das erste Scheibenventil 34 passieren kann, die eisförmige Komponente jedoch vom ersten Scheibenventil 34 zurückgehalten wird und dadurch im Messbehältnis 3 verbleibt. Zur Bestimmung des gesuchten Gehalts an Eis in der Probe muss noch das Volumen zumindest einer der Komponenten (der flüssigen oder der eisförmigen Komponente) der Probe ermittelt werden, wozu mehrere Möglichkeiten in Frage kommen: Zum einen kann mittels des ersten Füllhöhensensors 31 das Volumen der vom ersten Scheibenventil 34 im Messbehältnis 3 zurückgehaltenen eisförmigen Komponente bestimmt und danach der gesuchte Eisgehalt aus dem Volumen der Probe und dem Volumen des eisförmigen Komponente ermittelt werden. Zum anderen kann mittels einer Durchflussmessung nach dem ersten Scheibenventil 34 das Volumen der ablaufenden flüssigen Komponente der Probe ermittelt und danach der gesuchte Eisgehalt aus dem Volumen der Probe und dem Volumen der flüssigen Komponente bestimmt werden.

Gemäß einer zweiten Messvariante wird ohne Vermessung der Probe die flüssige Komponente durch Öffnen des ersten Auslassventils über das erste Scheibenventil 34 aus dem Messbehältnis 3 abgelassen und über die Messableitung 35 dem Behandlungsspeicherbehältnis 2 zugeführt, wobei mittels einer Durchflussmessung nach dem ersten Scheibenventil 34 das Volumen der ablaufenden flüssigen Komponente ermittelt und nach der Siebung das Volumen des im Messbehältnis 3 vom ersten Scheibenventil 34 zurückgehaltenen Eises bestimmt wird. Danach kann der gesuchte Eisgehalt aus dem Volumen der flüssigen Komponente und dem Volumen der eisförmigen Komponente bestimmt werden.

Gegebenenfalls kann zur Beschleunigung des Ablassens der flüssigen Komponente und/oder zur vollständigeren Abtrennung der flüssigen von der eisförmigen Komponente das Innere des Messbehältnisses 3 über die erste Drucklufteinheit 32 mit Druckluft beaufschlagt werden.

Nachdem die Volumenmessungen an der Probe und/oder den Komponenten der Probe abgeschlossen sind, wird der Durchflussquerschnitt der Durchflussöffnung (bzw. der Durchflussöffnungen) des ersten Scheibenventils 34 so geändert, dass die bei der Siebung im Messbehältnis 3 zurückgehaltene eisförmige Komponente das erste Scheibenventil 34 passieren und über die Messableitung 35 dem Behandlungsspeicherbehältnis 2 zugeführt werden kann.

Nach Ermittlung der Konzentration des Eises in der Probe wird mit Hilfe einer Konzentrationssteuereinrichtung die Konzentration nach der Differenz zwischen dem Istwert und dem Sollwert verändert. Es versteht sich von selbst, dass bei einer möglichen Übereinstimmung zwischen dem Istwert und dem Sollwert die Konzentration nicht verändert wird.

Die Veränderung der Konzentration an Eis im Eisbrei im Behandlungsspeicherbehältnis 2 erfolgt durch Zuführen von eisförmigem und/oder flüssigem Ausgleichskühlmittel in das Behandlungsspeicherbehältnis 2. Um die Menge an Ausgleichskühlmittel zu ermitteln, die erforderlich ist, um die Konzentration auf den Sollwert zu bringen, sind am Behandlungsspeicherbehältnis 2 (nicht dargestellte) Ausgleichssensoren vorgesehen, mit denen alle für die Berechnung erforderlichen Größen, wie z.B. das Volumens und/oder das Gewicht und/oder die Temperatur des Eisbreis, im Behandlungsspeicherbehältnis 2 bestimmt werden können. Die von den Ausgleichssensoren erfassten Werte werden einer (nicht dargestellten) Auswerteeinheit zugeführt, welche aus der ermittelten Konzentration und den über die Ausgleichsensoren erfassten Daten die erforderliche Menge an Ausgleichskühlmittel berechnet.

Zur Erzeugung von Ausgleichskühlmittel wird das Dosierbehältnis 4 mit einer Menge Vorratseisbrei gefüllt, wozu dem Dosierbehältnis 4 über den ersten Dosierzuleitungsabschnitt 45 und den zweiten Dosierzuleitungsabschnitt 46 Vorratseisbrei aus dem Vorratsspeicherbehältnis 1 zugeführt wird.

Der weitere Verfahrensablauf hängt nun davon ab, ob der gemessene Istwert der Eiskonzentartion der Probe den Sollwert unter- oder überschreitet.

Falls der Istwert größer als der Sollwert, die Eiskonzentration also zu hoch ist, wird das zweite Auslassventil geöffnet, das Durchflussweg-Umschaltventil 23 auf Durchfluss zwischen oberem Dosierableitungsabschnitt 24 und unterem Dosierableitungsabschnitt 22 geschaltet (bei gleichzeitiger Sperrung des Durchflusses vom oberen Dosierableitungsabschnitt 24 zur Dosierrückleitung 12).

Der Durchflussquerschnitt der Durchflussöffnung (bzw. der Durchflussöffnungen) des zweiten Scheibenventils 44 wird so eingestellt, dass die flüssige Komponente das zweite Scheibenventil 44 passieren kann, die eisförmige Komponente jedoch vom zweiten Scheibenventil 44 zurückgchalten wird und im Dosierbehältnis 4 verbleibt. Die für die Erreichung des Sollwertes erforderliche Menge an flüssiger Komponente wird über das zweite Scheibenventil 44 und die Dosierableitung 22 dem Behandlungsspeicherbehältnis 2 zugeführt.

Zur Rückführung der bei der Siebung im Dosierbehältnis 4 verbliebenen Masse (eisförmige Komponente bzw. Eisbrei) in das Vorratsspeicherbehältnis 1 wird in einem weiteren Schritt das Durchflussweg-Umschaltventil 23 auf Durchfluss zwischen oberem Dosierableitungsabschnitt 24 und Dosierrücklcitung 12 geschaltet (bei gleichzeitiger Sperrung des Durchflusses vom oberen zum unteren Dosierableitungsabschnitt) und der Durchflussquerschnitt der Durchflussöffnung (bzw. der Durchflussöffnungen) des zweiten Scheibenventils 44 so geändert, dass die eisförmige Komponente das zweite Scheibenventil 44 passieren kann. Die im Dosierbehältnis 4 verbliebene Masse kann nun über das zweite Scheibenventil 44 und die Dosierrückleitung 12 dem Vorratsspeicherbehältnis 1 zugeführt werden.

Falls die Menge an flüssiger Komponente, die mit einer einmaligen Befüllung des Dosierbehältnisses 4 gewonnen werden kann, kleiner als die für die Erreichung des Sollwertes erforderliche Menge an flüssiger Komponente ist, wird das Dosierbehältnis 4 mit Vorratseisbrei aus dem Vorratsspeicherbehältnis 1 so oft erneut befüllt, und die auf das Füllen des Dosierbehältnisses 4 zur Gewinnung weiterer flüssiger Komponenten folgenden Schritte werden jeweils wie oben beschrieben wiederholt, bis die erforderliche Menge an flüssiger Komponente erreicht ist. Die Messung des Volumens der flüssigen Komponente kann z.B. über eine Durchflussmessung der ablaufenden flüssigen Komponente nach dem zweiten Scheibenventil 44 erfolgen.

Falls der gemessene Istwert der Eiskonzentration der Probe kleiner als der Sollwert, die Eiskonzentration also zu gering, ist, wird das zweite Auslassventil geöffnet, das Durchflussweg-Umschaltventil 23 auf Durchfluss zwischen oberem Dosierableitungsabschnitt 24 und Dosierrückleitung 12 geschaltet (bei gleichzeitiger Sperrung des Durchflusses vom oberen zum unteren Dosierableitungsabschnitt). Der Durchflussquerschnitt der Durchflussöffnung (bzw. der Durchflussöffnungcn) im zweiten Scheibenventil 44 wird so eingestellt, dass die flüssige Komponente das zweite Scheibenventil 44 passieren kann, die eisförmige Komponente jedoch vom zweiten Scheibenventil 44 zurückgehalten wird und im Dosierbehältnis 4 verbleibt. Die flüssige Komponente wird über das zweite Scheibenventil 44 und die Dosierückleitung 12 in das Vorratspeicherbehältnis 1 geleitet. Danach wird das Durchflussweg-Umschaltventil 23 auf Durchfluss zwischen oberem Dosierableitungsabschnitt 24 und unterem Dosierableitungsabschnitt 22 geschaltet (bei gleichzeitiger Sperrung des Durchflusses vom oberen Dosierableitungsabschnitt 24 zur Dosierrückleitung 12) und der Durchflussquerschnitt der Durchflussöffnung (bzw. der Durchflussöffnungen) des zweiten Scheibenventils 44 so geändert, dass die eisförmige Komponente das zweite Scheibenventil 44 passieren kann. Nun wird die für die Erreichung des Sollwertes erforderliche Menge an eisförmiger Komponente über das zweite Scheibenventil 44 und die Dosierableitung 22 dem Behandlungsspeicherbehältnis 2 zugeführt.

Falls die Menge an eisförmiger Komponente, die mit einer einmaligen Befüllung des Dosierbehältnisses 4 gewonnen werden kann, kleiner als die für die Erreichung des Sollwertes erforderliche Menge an eisförmiger Komponente ist, wird das Dosierbehältnis 4 so oft mit Vorratseisbrei aus dem Vorratsspeicherbehältnis 1 erneut befüllt und die auf das Füllen des Dosierbehältnisses 4 zur Gewinnung weiterer eisförmiger Komponenten folgenden Schritte werden jeweils wie oben beschrieben wiederholt, bis die erforderliche Menge an eisförmiger Komponente erreicht ist. Die Messung der Menge der eisförmigen Komponente erfolgt z.B. über eine Volumenmessung mittels des zweiten Füllhöhensensors.

Gegebenenfalls kann zur Beschleunigung des Ablassens der flüssigen Komponente und/oder zur vollständigeren Abtrennung der flüssigen von der eisförmigen Komponente das Innere des Dosierbehältnisses 4 mit der zweiten Drucklufteinheit 42 mit Druckluft beaufschlagt werden.

Dem Fachmann wird klar sein, dass mit Hilfe von Dichteangaben Masse-und Volumengrößen ineinander umgerechnet werden könncn, d.h. dass statt der Volumina auch die Gewichte der zu vermessenden Massen gemessen werden können. Selbstverständlich kann mit dem erfindungs-gemäßen Verfahren sowohl die Massen- als auch als Volumenkonzentration ermittelt werden. Da es sich bei der Dichte um eine Temperaturabhängige Größe handelt, sind am Messbehältnis 3 und/oder am Dosierbehältnis 4 gegebenenfalls Temperatursensoren vorgesehen.

## Patentansprüche

1. Verfahren zum Behandeln von Eisbrei, der aus einem Kühlmittel, insbesondere aus einem Wasser-Alkohol-Gemisch, erzeugt und in einem Behandlungsspeicherbehältnis (2) gespeichert und zur Abfüllung bereitgestellt wird,
**dadurch gekennzeichnet,**
**dass** bei dem Verfahren die Konzentration an Eis im Eisbrei ermittelt, der ermittelte Istwert mit einem vorgegeben Sollwert verglichen und die Konzentration nach der Abweichung des Istwertes vom Sollwert verändert wird.

2. Verfahren nach Anspruch 1,
**dadurch gekennzeichnet,**
**dass** bei dem Verfahren eine Probe Eisbrei aus dem Behandlungsspeicherbehältnis (2) entnommen und die Konzentration der Probe ermittelt wird.

3. Verfahren nach Anspruch 1 oder 2
**dadurch gekennzeichnet,**
**dass** der Eisbrei zur Erzielung einer homogenen Eiskonzentration vor der Entnahme der Probe durchmischt wird.

4. Verfahren nach Anspruch 2 oder 3,
**dadurch gekennzeichnet,**
**dass** die flüssige Komponente und die eisförmige Komponente der Probe voneinander getrennt werden und die Konzentration durch eine Kombination zweier Gewichts- und/oder Volumenmessungen von mindestens einer der Komponenten und/oder der Probe ermittelt wird.

5. Verfahren nach Anspruch 4,
**dadurch gekennzeichnet,**
**dass** vor der Trennung der Komponenten das Gewicht und/oder das Volumen der Probe ermittelt und nach oder während der Trennung das Gewicht und/oder das Volumen mindestens einer der Komponenten ermittelt wird.

6. Verfahren nach Anspruch 4,
**dadurch gekennzeichnet,**
**dass** nach und/oder während der Trennung der Komponenten das Gewicht und/oder das Volumen jeder der beiden Komponenten ermittelt wird.

7. Verfahren nach einem der Ansprüche 2 bis 6,
**dadurch gekennzeichnet,**
**dass** eine Menge an Eisbrei in einem Kreislauf zirkuliert und die Probe aus der zirkulierten Menge entnommen wird.

8. Verfahren nach einem der Ansprüche 4 bis 7,
**dadurch gekennzeichnet,**
**dass** die Probe zur Trennung der Komponenten einer Siebung unterzogen wird.

9. Verfahren nach einem der Ansprüche 1 bis 8,
**dadurch gekennzeichnet,**
**dass** die Konzentration durch Zuführen von eisförmigem und/oder flüssigem Ausgleichskühlmittel in das Behandlungsspeicherbehältnis (2) verändert wird.

10. Verfahren nach Anspruch 9,
**dadurch gekennzeichnet,**
**dass**, falls der Istwert den Sollwert überschreitet, dem Behandlungsspeicherbehältnis (2) flüssiges Augleichskühlmittel oder Ausgleichseisbrei zugeführt wird, dessen Eiskonzentration unterhalb des Istwertes liegt und dass, falls der Istwert den Sollwert unterschreitet, dem Behandlungsspeicherbehältnis (2) Ausgleichseis oder Ausgleichseisbrei zugeführt wird, dessen Eiskonzentration oberhalb des Istwertes liegt.

11. Verfahren nach Anspruch 9 oder 10,
**dadurch gekennzeichnet,**
**dass** das Ausgleichseis, der Ausgleichseisbrei sowie das flüssige Ausgleichskühlmittel aus einem zusätzlich zum Eis im Behandlungsspeicherbehältnis (2) vorhandenem Eisbreivorrat gewonnen werden.

12. Verfahren nach Anspruch 11,
**dadurch gekennzeichnet,**
**dass** zur Gewinnung des Ausgleichseises, des Ausgleichseisbreis sowie des flüssigen Ausgleichskühlmittels das Eis und die flüssigen Komponenten des aus dem Eisbreivorrat entnommenem Vorratseisbreis voneinander getrennt werden.

13. Verfahren nach Anspruch 11 oder 12,
**dadurch gekennzeichnet,**
**dass** der Vorratseisbrei zur Trennung der Komponenten einer Siebung unterzogen wird.

14. Verfahren nach einem der Ansprüche 11 bis 13,
**dadurch gekennzeichnet,**
**dass** ein mit einer Menge Eisbrei befüllbares Aufnahmebehältnis bereitgestellt wird, an dem eine Trennvorrichtung, insbesondere ein Sieb, vorgesehen ist, mit der die flüssige Komponente und das Eis der Menge voneinander getrennt werden können, wobei am Aufnahmebehältnis Messmittel zur Messung des Volumens und/oder des Gewichts einer in das Behältnis gefüllten Masse vorgesehen sind, wobei zur Bestimmung der Konzentration die Probe in das Aufnahmebehältnis gefüllt, die flüssige Komponente und das Eis der Probe voneinander getrennt werden, und die Konzentration durch die Kombination zweier Gewichts- und/oder Volumenmessungen von mindestens einer der Komponenten und/oder der Probe ermittelt wird und wobei zur Erzeugung von flüssigem Ausgleichskühlmittel, Ausgleichseisbrei oder Ausgleichseis Vorratseisbrei in das Aufnahmebehältnis gefüllt und die flüssige Komponente vom Eis des Vorratseisbreis getrennt werden.

15. Verfahren nach Anspruch 14,
**dadurch gekennzeichnet,**
**dass** am Aufnahmebehältnis Druckbeaufschlagungsmittel vorgesehen sind, mit denen der im Aufnahmebehältnis herrschende Druck bei der Siebung erhöht wird.

16. Verfahren nach einem der Ansprüche 1 bis 15,
**dadurch gekennzeichnet,**
**dass** ein mit der Probe befüllbares Messbehältnis (3) und ein mit Vorratseisbrei befüllbares Dosierbehältnis (4) bereitgestellt werden, wobei am Messbehältnis (3) und am Dosierbehältnis (4) jeweils eine Trennvorrichtung vorgesehen ist.

17. Verfahren nach einem der Ansprüche 4 bis 16,
**dadurch gekennzeichnet,**
**dass** am Messbehältnis (3) Messmittel zur Messung des Volumens und/ oder des Gewichts einer im Messbehältnis (3) enthaltenen Masse vorgesehen sind, wobei die Probe in das Messbehältnis (3) gefüllt, die flüssige Komponente und die eisförmige Komponente der Probe voneinander getrennt werden, und die Konzentration durch die Kombination zweier Gewichts- und/oder Volumenmessungen von mindestens einer der Komponenten und/oder der Probe ermittelt wird.

18. Verfahren nach Anspruch 16 oder 17,
**dadurch gekennzeichnet,**
**dass** zur Erzeugung von flüssigem Ausgleichskühlmittel, Ausgleichseisbrei oder Ausgleichseis Vorratseisbrei in das Dosierbehältnis (4) gefüllt und die flüssige Komponente vom Eis des Vorratseisbrei getrennt wird.

19. Verfahren nach einem der Ansprüche 16 bis 18,
**dadurch gekennzeichnet,**
**dass** am Dosierbehältnis (4) Messmittel zur Messung des Volumens und/ oder des Gewichts der im Messbehältnis (4) enthaltenen Masse vorgesehen sind wobei mit dem Messmittel die erforderliche Menge an flüssigem Ausgleichskühlmittel, Ausgleichseisbrei oder Ausgleichseis abgemessen wird.

20. Verfahren nach einem der Ansprüche 16 bis 19,
**dadurch gekennzeichnet,**
**dass** am Messbehältnis (3) und/oder am Dosierbehältnis (4) Druckbeaufschlagungsmittel vorgesehen sind, mit denen der im Behältnis herrschende Druck bei der Siebung erhöht wird.

21. Verfahren nach einem der Ansprüche 2 bis 20,
**dadurch gekennzeichnet,**
**dass** die Probe nach der Vermessung wieder dem Behandlungsspeicherbehältnis (2) zugeführt wird.

22. Verfahren nach einem der Ansprüche 12 bis 21,
**dadurch gekennzeichnet,**
**dass** die nicht dem Behandlungsspeicherbehältnis (2) zuzuführende Menge an Vorratseisbrei wieder dem Eisbreivorrat zugeführt wird.

23. Vorrichtung zum Behandeln von Eisbrei, der aus einem Kühlmittel, insbesondere aus einem Wasser-Alkohol-Gemisch erzeugt wird, wobei die Vorrichtung ein mit Eisbrei befüllbares Behandlungsspeicherbchältnis (2) umfasst,
**dadurch gekennzeichnet,**
**dass** die Vorrichtung eine Erfassungseinrichtung aufweist, mit der die Konzentration an Eis im Eisbrei ermittelt werden kann und dass die Vorrichtung eine Konzentrationssteuereinrichtung umfasst, mit der der ermittelte Istwert mit einem vorgegeben Sollwert verglichen und die Konzentration nach der Abweichung des Istwertes vom Sollwert verändert werden kann.

24. Vorrichtung nach Anspruch 23,
**dadurch gekennzeichnet,**
**dass** die Erfassungseinrichtung Mittel zur Entnahme einer Probe aus dem Speicherbehältnis und Mittel zur Bestimmung der Eiskonzentration der Probe umfasst.

25. Vorrichtung nach Anspruch 23 oder 24,
**dadurch gekennzeichnet,**
**dass** am Behandlungsspeicherbehältnis (2) ein zweites Rührwerk (20) vorgesehen ist.

26. Vorrichtung nach einem der Ansprüche 23 bis 25,
**dadurch gekennzeichnet,**
**dass** die Konzentrationssteuereinrichtung Mittel zum Zuführen von eisförmigem und/oder flüssigem Ausgleichskühlmittel in das Behandlungsspeicherbehältnis (2) umfasst, wobei mit dem Ausgleichskühlmittel die Konzentration verändert werden kann.

27. Vorrichtung nach Anspruch 26,
**dadurch gekennzeichnet,**
**dass** die Konzentrationssteuereinrichtung ausgelegt ist, um dem Behandlungsspeicherbehältnis (2) flüssiges Augleichskühlmittel oder Augleichseisbrei, dessen Eislconzentration unterhalb des Istwertes liegt, zuzuführen, falls der Istwert den Sollwert überschreitet, und dass die Konzentrationssteuereinrichtung ausgelegt ist, um dem Behandlungsspcicherbehältnis (2) flüssiges Auglcichskühlmittel oder Augleichseisbrei zuzuführen, dessen Eiskonzentration unterhalb des Istwertes liegt, falls der Istwert den Sollwert unterschreitet.

28. Vorrichtung nach einem der Ansprüche 23 bis 27,
**dadurch gekennzeichnet,**
**dass** die Vorrichtung mit einer Eisbreierzeugereinrichtung (E) verbunden ist, mit der Vorratseisbrei erzeugt werden kann, wobei aus dem Vorratseisbrei das Ausgleichseis, der Ausgleichseisbrei und das flüssige Ausgleichskühlmittel gewonnen werden kann.

29. Vorrichtung nach einem der Ansprüche 23 bis 28,
**dadurch gekennzeichnet,**
**dass** die Vorrichtung mindestens ein mit einer Menge Eisbrei befüllbares Aufnahmebehältnis aufweist, an dem eine Trennvorrichtung, insbesondere ein Sieb, vorgesehen ist, mit der die flüssige Komponente und das Eis der Menge voneinander getrennt werden können.

30. Vorrichtung nach Anspruch 29,
**dadurch gekennzeichnet,**
**dass** am Aufnahmebehältnis Messmittel zur Messung des Volumens und/oder des Gewichts einer in das Behältnis gefüllten Masse vorgesehen sind, wobei die mit dem Messmittel gemessenen Messwerte der Steuereinrichtung zuführbar sind.

31. Vorrichtung nach Anspruch 2.9 oder 30,
**dadurch gekennzeichnet,**
**dass** am Aufnahmebehältnis ein Füllstandsensor zur indirekten Bestimmung des Volumens der Menge aus der Füllhöhe vorgesehen ist.

32. Vorrichtung nach einem der Ansprüche 29 bis 31,
**dadurch gekennzeichnet,**
**dass** am Aufnahmebehältnis Druckbeaufschlagungsmittel vorgesehen sind, mit denen der im Aufnahmebehältnis herrschende Druck bei der Siebung erhöht werden kann.

33. Vorrichtung nach Anspruch 32,
**dadurch gekennzeichnet,**
**dass** es sich bei dem Druckbeaufschlagungsmittel um eine Drucklufteinrichtung handelt.

34. Vorrichtung nach einem der Ansprüche 23 bis 28,
**dadurch gekennzeichnet,**
**dass** die Vorrichtung ein mit einer Probe befüllbares Messbehältnis (3) und ein mit Vorratseisbrei befüllbares Dosierbehältnis (4) aufweist, wobei am Messbehältnis (3) und am Dosierbehältnis jeweils eine Trennvorrichtung vorgesehen ist, mit der die flüssige Komponente und das Eis des in die Behältnisse gefüllten Eisbreis voneinander getrennt werden können.

35. Vorrichtung nach Anspruch 34,
**dadurch gekennzeichnet,**
**dass** am Messbehältnis (3) Messmittel zur Bestimmung des Volumens und/oder des Gewichts einer in das Messbehältnis gefüllten Masse vorgesehen sind, wobei die mit dem Messmittel gemessenen Messwerte der Konzentrationssteuereinrichtung zuführbar sind.

36. Vorrichtung nach Anspruch 34 oder 35,
**dadurch gekennzeichnet,**
**dass** zwischen dem Messbehältnis (3) und dem Speicherbehältnis mindestens eine erste Förderleitung vorgesehen ist, mit der Eisbrei zwischen Messbehältnis (3) und dem Behandlungsspeicherbehältnis (2) gefördert werden kann.

37. Vorrichtung nach einem der Ansprüche 34 bis 36,
**dadurch gekennzeichnet,**
**dass** am Dosierbehältnis (4) Messmittel zur Messung des Volumens und/oder des Gewichts einer in das Dosierbehältnis gefüllten Masse vorgesehen sind, wobei die Messmittel mit der Konzentrationssteuereinrichtung in Verbindung stehen.

38. Vorrichtung nach einem der Ansprüche 34 bis 37,
**dadurch gekennzeichnet,**
**dass** zwischen der Eisbreierzeugereinrichtung (E) und dem Dosierbehältnis (4) mindestens eine zweite Förderleitung vorgesehen ist, mit der Eisbrei von der Erzeugereinrichtung (E) zum Dosierbehältnis.(4) gefördert werden kann und dass zwischen dem Dosierbehältnis (4) und dem Behandlungsspeicherbehältnis (2) mindestens eine dritte Förderleitung vorgesehen ist, mit der Eisbrei vom Dosierbehältnis (4) in das Behandlungsspeicherbehältnis (2) gefördert werden kann.

39. Vorrichtung nach einem der Ansprüche 34 bis 38,
**dadurch gekennzeichnet,**
**dass** am Messbehältnis (3) und/oder am Dosierbehältnis (4) ein Füllstandsensor zur indirekten Bestimmung des Volumens aus der Füllhöhe vorgesehen ist.

40. Vorrichtung nach einem der Ansprüche 34 bis 39,
**dadurch gekennzeichnet,**
**dass** am Messbehältnis (3) und/oder am Dosierbehältnis (4) Druckbeaufschlagungsmittel vorgesehen sind, mit denen der im Behältnis herrschende Druck bei der Siebung erhöht werden kann.

41. Vorrichtung nach Anspruch 40,
**dadurch gekennzeichnet,**
**dass** es sich bei dem Druckbeaufschlagungsmittel um eine Druckluft-einrichtung (32, 42) handelt.

42. Vorrichtung nach einem der Ansprüche 24 bis 41,
**dadurch gekennzeichnet,**
**dass** die Vorrichtung eine Zirkulationseinrichtung (5) umfasst, in der eine Menge an Eisbrei in einem Kreislauf zirkuliert werden kann, wobei dem Kreislauf die Probe entnommen werden kann.

43. Vorrichtung nach Anspruch 42,
**dadurch gekennzeichnet,**
**dass** die Zirkulationseinrichtung (5) in Strömungsverbindung mit dem Aufnahmebehältnis oder dem Messbehältnis (3) steht.

44. Mit Eisbrei bcfüllbares Prozessbehältnis, insbesondere zur Verwendung als Aufnahmebehältnis, Messbehältnis (3) oder Dosierbehältnis (4) an der Vorrichtung nach einem der Ansprüche 29 bis 43,
**dadurch gekennzeichnet,**
**dass** das Aufnahmebehältnis eine Trennvorrichtung aufweist, mit der die flüssige Komponente und das Eis des Eisbreis voneinander getrennt werden können.

45. Prozessbehältnis, nach Anspruch 44,
**dadurch gekennzeichnet,**
**dass** die Trennvorrichtung in der Art eines Siebes ausgeführt ist.

46. Prozessbehältnis nach Anspruch 44 oder 45,
**dadurch gekennzeichnet,**
**dass** am Prozessbehältnis Messmittel zur Messung des Volumens und/oder des Gewichts der im Behältnis enthaltenen Masse vorgesehen sind.

47. Prozessbehältnis nach einem der Ansprüche 44 bis 46,
**dadurch gekennzeichnet,**
**dass** am Prozessbehältnis ein Füllstandsensor zur indirekten Bestimmung des Volumens der Masse aus der Füllhöhe vorgesehen ist.

48. Prozessbehältnis nach einem der Ansprüche 44 bis 47,
**dadurch gekennzeichnet,**
**dass** am Prozessbehältnis Druckbeaufschlagungsmittel vorgesehen sind, mit denen der im Prozessbehältnis herrschende Druck erhöht werden kann.

49. Prozessbehältnis nach Anspruch 48,
**dadurch gekennzeichnet,**
**dass** es sich bei dem Druckbeaufschlagungsmittel um eine Drucklufteinrichtung handelt.

50. Prozessbehältnis nach einem der Ansprüche 44 bis 49,
**dadurch gekennzeichnet,**
**dass** das Prozessbehältnis säulenförmig, insbesonder zylindrisch, ausgebildet ist und im Bereich des Bodens ein Sieb aufweist, unterhalb dessen ein mit einer Ableitung verbindbarer, verschließbarer Auslass vorgesehen ist, und dass im oberen Bereich des Prozessbehältnises ein mit einer Zuleitung verbindbarer, verschließbarer Einlass vorgesehen ist.

51. Prozessbehältnis nach einem der Ansprüche 44 bis 50,
**dadurch gekennzeichnet,**
**dass** das Prozessbehältnis in der Art einer Schaulaterne ausgeführt ist.
